# EUROPÄISCHE PATENTSCHRIFT

(11) **EP 3 460 267 B1**
(45) Veröffentlichungstag und Bekanntmachung des Hinweises auf die Patenterteilung: **11.08.2021**
(21) Anmeldenummer: 18195658.2
(22) Anmeldetag: 20.09.2018
(51) Int. Cl.: F16B 2/18, F16B 43/00, E04F 11/18, F16B 2/14

(54) **SYSTEM ZUM FIXIEREN VON GELÄNDERPLATTEN**
SYSTEM FOR FIXING RAILING PLATES
SYSTÈME DE FIXATION DE PLAQUES DE MAIN-COURANTE

(30) Priorität: 20.09.2017 DE 202017105698 U
(43) Veröffentlichungstag der Anmeldung: 27.03.2019
(73) Patentinhaber: Q-Railing Europe GmbH & Co. KG, 46446 Emmerich am Rhein (DE)
(72) Erfinder:
(74) Vertreter: btb IP Bungartz Baltzer Partnerschaft mbB Patentanwälte

(56) Entgegenhaltungen:
- DE-A1- 4 022 299
- DE-A1- 10 033 432
- FR-A1- 2 930 270
- US-A- 3 343 577
- US-A1- 2016 298 337
- US-A1- 2017 058 928
- US-A1- 2017 292 274

## Beschreibung

Die Erfindung betrifft eine Klemmvorrichtung für die klemmende Fixierung von Geländerplatten nach Anspruch 1 sowie ein Geländerplattenfixiersystem nach Anspruch 13 umfassend eine derartige Klemmvorrichtung mit einem Werkzeugansatz sowie einem auf den Werkzeugansatz angepassten Verdrehwerkzeug.

In jüngerer Zeit werden vermehrt Geländer verbaut, bei denen Ganzglasgeländerplatten zum Einsatz kommen, die freistehend nur mit ihrem unteren Rand in Geländerplattenaufnahme eingesetzt sind, oder bei denen insbesondere von Geländerpfosten gebildete Tragstrukturen zum Einsatz kommen, an denen die Geländerplatten mittels Glasklemmen gehalten werden. Insbesondere schwere weitgehend freistehende Glasplatten müssen über Klemmvorrichtungen fest in der Geländerplattenaufnahme fixiert werden und ausreichend Kräfte aufnehmen können, um als zuverlässige Absturzsicherung dienen zu können. Dabei können die Kräfte, die über die Glasplatte und die Klemmvorrichtung auf die Geländerplattenaufnahme wirken, wenn sich zum Beispiel eine oder mehrere Personen gegen das Geländer lehnen, aufgrund der Hebelverhältnisse erheblich sein. Als Geländerplattenaufnahmen kommen insbesondere an einem Baukörper zu verankernde und typischerweise u-förmige Halteprofile, am Baukörper bevorzugt bodenseitig beabstandet voneinander zu verankernde Einzelbodenklemmen oder unmittelbar in einem Bauwerkkörper selbst eingebrachte nutartige Plattenaufnahmen in Betracht. Als Glasklemmen kommen in der Regel die Geländerplatte beidseitig umgreifende Klemmen mit gegen die Geländerplatten anzustellenden Klemmflächen zum Einsatz, wobei im Stand der Technik als Spannmittel Schrauben eingesetzt werden.

Bei einer klemmenden Fixierung wird die Geländerplatte nicht von einem Befestigungsmittel durchdrungen, sondern durch die mittels des Klemmsystems auf die Geländerplattenoberfläche ausgeübte Klemmkraft in der Plattenaufnahme oder der Glasklemme kraftschlüssig verspannt. Von derartigen grundsätzlich bekannten Geländerplattenaufnahmen, Glasklemmen und Klemmvorrichtungen geht auch die Erfindung aus. Die Erfindung wird nachfolgend insbesondere mit Blick auf Ganzglasgeländer mit weitgehend freistehenden Ganzglasgeländerplatten beschrieben.

Zur Fixierung von Geländerplatten in Geländerplattenaufnahmen sind aus dem Stand der Technik Einschlagkeilsysteme bekannt, bei denen quer zur Geländerverlaufsrichtung und senkrecht zur Geländerplattenoberfläche schmal bauende Klemmkeile in den Klemmspalt zwischen der Geländerplattenoberfläche und einer seitlichen Stützfläche der Geländerplattenaufnahme eingetrieben bzw. eingeschlagen werden. Derartige Einschlagkeilsysteme erfordern nur ein Minimum an Bauraum und lassen sich mittels geeigneter Werkzeuge auch bei sehr schmalen Klemmspaltverhältnissen unter Erzeugung einer hohen Klemmkraft gut eintreiben. Hierdurch können auch Halteprofile zur Aufnahme der Geländerplatten sehr schmal ausgebildet sein. Einschlagkeilsysteme mit einteiligen Klemmkeilen, die in keilförmig ausgebildete Klemmspalte eingetrieben werden, offenbaren die von der Anmelderin selbst stammenden Druckschriften DE 20 2017 100 179 U1, EP 2 896 764 A1 und DE 20 2014 100 163 U1. Weitere Einschlagkeilsysteme oder ähnliche Keilsysteme mit in den Klemmspalt einzutreibenden Keilen, bei denen auch zwei sich überlagernde Keilelemente Verwendung finden können, sind beispielsweise aus den Druckschriften US 2002/0195595 A1, DE 20 2007 009 239 U1, EP 3 199 738 A2 und EP 2 460 949 A1 bekannt.

Aus dem Stand der Technik ebenfalls bekannt sind Spannkeilsysteme mit innenliegenden Spannmitteln, bei denen mehrere Spannkeilelemente zum Einsatz kommen, die insbesondere über innenliegende Spannschrauben gegeneinander verspannt werden. Beim Anziehen der innenliegenden Spannschrauben rutschen einzelne Keilelemente des Spannkeilsystems unter Aufweitung der quer zur Geländerplatte wirksamen Klemmweite des Systems aufeinander ab. Derartige Spannkeilsysteme sind zwar hinsichtlich der mit ihnen aufgebrachten Klemmkräfte gut zu dosieren und können auch nachträglich wieder auf einfache Weise gelöst werden. Da bei Spannkeilsystemen aber eine recht hohe Zahl an Einzelelementen zusammenwirken müssen sind derartige Systeme verhältnismäßig komplex aufgebaut. Infolge der Notwendigkeit, dass die zur Aufweitung erforderlichen innenliegenden Spannelemente auch bei in der Geländerplattenaufnahme bereits eingesetzten Geländerplatte von außen zugänglich sein und außerdem in der Lage sein müssen, die erforderlichen hohen Klemmkräfte aufzubringen, bauen sie recht breit oder erfordern speziell auf das jeweils eingesetzte Spannkeilsystem abgestimmte Geländerplattenaufnahmen. Spannkeilsysteme mit innenliegenden Spannmitteln sind in der EP 1 818 476 A1, der EP 2 921 606 A1, der WO 2011/156463 A2, der US 2015/0110552 A1, der EP 3 179 007 A1, der FR 2 930 270 A1 oder der WO 2009/017873 A1 offenbart.

Aus der Druckschrift US 2016/0298337 A1 ist eine Klemmvorrichtung bekannt, bei der als ein von außen zugängliches Spannmittel eine die Seitenwand der Geländerplattenaufnahme durchdringende Spannschraube verwendet wird. Hierbei ist zusätzlich zur Geländerplattenaufnahme eine äußere Blende zur Kaschierung der Spannschraube erforderlich und die Positionierung der Klemmvorrichtung ist von der Positionierung des Gewindedurchgangs vorgegeben.

Die Druckschrift US 2017/0058928 A1 offenbart eine Klemmvorrichtung gemäß dem Oberbegriff des Anspruchs 1, bei der die beiden Klemmteile von einer inneren Klemmscheibe und einem gegenüber der inneren Klemmscheibe zu verdrehenden äußeren Nutenring gebildet sind, und über ein Gewinde zusammenwirken. So lassen sich hohe Klemmkräfte erzielen, allerdings erfolgt pro Drehwinkel nur eine geringe Erhöhung der Klemmweite. Ein in den Nutenring eingreifendes Werkzeug muss sehr oft angesetzt werden, was die Montage mühsam macht. Der Einsatz eines Gewindes schränkt außerdem die Materialauswahl stark ein, da ein für die auftretenden Kräfte ausreichend dimensioniertes Gewinde beispielsweise durch günstige Kunststoffteile nicht realisiert werden kann.

Die Erfindung macht sich zur Aufgabe, eine Klemmvorrichtung der eingangs genannten Art bereitzustellen, die flach aufbaut, mit wenigen Bauteilen auskommt, einfach zu montieren und zu betätigen sowie bei Bedarf auch leicht wieder zu lösen ist. Weiter soll die Klemmvorrichtung zumindest zu einem gewissen Grad eine gegenüber Klemmkeilsystemen bessere und entlang des Geländerplattenverlaufs gleichmäßige Dosierung der Klemmkraft ermöglichen und ohne innere Spannelemente auskommen. Die Klemmvorrichtung soll ferner eine lediglich einseitig (gebäudeseitig) zu betätigende Klemmung ermöglichen, so dass ein Monteur nur auf der Gebäudeseite der Geländerplatte tätig sein muss, um die Fixierung der Geländerplatten herbeizuführen.

Die Erfindung geht dabei von einer Klemmvorrichtung aus, die für die klemmende Fixierung von Geländerplatten in einer Geländerplattenaufnahme und insbesondere zur Anordnung in einem zwischen einer Geländerplattenoberfläche und einer seitlichen Stützfläche der Geländerplattenaufnahme gebildeten Klemmspalt oder für die klemmende Fixierung von Geländerplatten mittels einer insbesondere an einem Geländerpfosten oder einer sonstigen Tragstruktur anzubringenden Glasklemme eingerichtet ist. Die Klemmvorrichtung weist ein erstes Klemmteil und ein zweites Klemmteil auf, die derart zusammenwirken, dass eine Verlagerung des einen Klemmteils relativ zum anderen Klemmteil aus einer Montageausrichtung in eine Klemmausrichtung eines der beiden Klemmteile unter Erzeugung einer Klemmkraft in Richtung der Geländerplatte drängt. Dabei ist insbesondere vorgesehen, dass die Verlagerung des einen Klemmteils zum anderen Klemmteil zur Erzeugung der Klemmkraft eine Vergrößerung der effektiven Klemmbreite der Klemmvorrichtung in einer Richtung senkrecht zur Geländerplattenoberfläche bewirkt. Hierzu sind das eine Klemmteil und das andere Klemmteil bei Anordnung des gegenüber dem anderen Klemmteil zu verlagernden einen Klemmteils innerhalb der Geländerplattenaufnahme, insbesondere innerhalb des Klemmspalts, zur Erzeugung der Klemmkraft relativ zueinander um eine um eine senkrecht zur seitlichen Geländerplattenoberfläche stehenden Drehachse D zu verdrehen. Demnach sind die Klemmteile derart zueinander angeordnet, dass die Verlagerung der beiden Klemmteile zueinander in einem Verdrehen des einen Klemmteils relativ zum anderen Klemmteil besteht, wobei durch das Verdrehen der beiden Klemmteile zueinander, insbesondere durch ein Verdrehen des einen Klemmteils relativ zum anderen Klemmteil, die effektive Klemmweite der Klemmvorrichtung erhöht bzw. eines der Klemmteile zur Geländerplatte hin gedrängt wird, um die Klemmkraft aufzubauen. Eine derartige Klemmvorrichtung so ohne innere Spannmittel aus.

Zur Lösung der Aufgabe und um die gewünschte Vergrößerung der effektiven Klemmbreite zu erreichen, weist erfindungsgemäß zumindest eines der beiden Klemmteile eine oder mehrere zum anderen Klemmteil weisende Keilflächen auf, auf der das andere Klemmteil beim Verdrehen abgleitet. Bevorzugt weisen sowohl das erste Klemmteil eine oder mehrere erste Keilflächen als auch das zweite Klemmteil eine oder mehrere zweite Keilflächen auf, die weiter bevorzugt derart aufeinander abgestimmt sind, dass die miteinander zusammenwirkenden ersten und zweiten Keilflächen sich in der Montageausrichtung unmittelbar gegenüberliegen und entweder in Kontakt miteinander stehen oder durch das Verdrehen in Richtung der Klemmausrichtung in Kontakt miteinander geraten.

Bevorzugt sind an wenigstens einem der Klemmteile mehrere in Umfangsrichtung hintereinander angeordnete Keilflächen vorgesehen, die sich in Umfangsrichtung jeweils über wenigstens einen Teil eines Ringabschnitts des Klemmteils erstrecken. Insbesondere können sich mehrere Keilflächen über denselben umlaufenden Ringabschnitt erstrecken, so dass ein umlaufender Ringabschnitt in Umfangsrichtung mehrere in gleicher Umfangsrichtung ausgerichtete ansteigende bzw. abfallende Keilflächen aufweisen kann.

Es können auch mehrere in unterschiedlichem radialen Abstand von einer Drehachse vorgesehene Ringabschnitte jeweils mit wenigstens einer oder auch mit mehreren Keilflächen versehen sein. Hierzu weist wenigstens eines der Klemmteile einen inneren Ringabschnitt mit einer oder mehreren sich in Umfangsrichtung erstreckenden Keilflächen und einen äußeren Ringabschnitt mit einer oder mehreren sich in Umfangsrichtung erstreckenden Keilflächen auf. Bevorzugt weisen beide Klemmteile zueinander korrespondierende innere und äußere Ringabschnitte mit jeweils einer oder mehreren in Umfangsrichtung aufeinander folgenden Keilflächen auf.

Wenn sich mehrere Keilflächen über einen Ringabschnitt verteilen, überbrückt bevorzugt jede der Keilflächen dieselbe Höhe und weist ferner bevorzugt dieselbe Steigung in Umfangsrichtung (mm/grad) bzw. denselben Steigungswinkel α auf.

Die Steigung in Umfangsrichtung bzw. der Steigungswinkel der Keilfläche(n) ist bevorzugt derart, dass das erste Klemmteil und das zweite Klemmteil in der Klemmausrichtung selbsthemmend in Anlage sind. Durch diese Selbsthemmung der über die Klemmkraft aneinandergedrückten Keilflächen ist eine zusätzliche Sicherung des zu verdrehenden Klemmteils gegen ungewolltes Zurückdrehen nicht erforderlich.

Das Vorsehen mehrerer sich in Umfangsrichtung über einen Teilringabschnitt erstreckender hintereinander befindlicher Keilflächen hat gegenüber einer Ausführung, bei der eine einzelne Keilfläche sich über einen Großteil des Umfangs oder sogar über den gesamten Umfang erstreckt, also annähernd oder vollständig die gesamte umlaufende Ringfläche bildet, den Vorteil, dass zur Erzielung der gewünschten Vergrößerung der effektiven Klemmbreite eine geringere Verdrehung der Klemmteile zueinander erforderlich ist.

Das erste Klemmteil und das zweite Klemmteil können miteinander korrespondierende Eingriffsglieder und/oder Rastglieder aufweisen, die die Klemmteile zumindest in der Montageausrichtung in Eingriff miteinander halten. Als Eingriffsglieder können an einem der Klemmteile ein bevorzugt zentrisch angeordneter Eingriffsdorn und am anderen Klemmteil eine ebenfalls bevorzugt zentrisch angeordnete Eingriffsöffnung vorgesehen sein. Die Eingriffsglieder können insbesondere einen bajonettartigen Eingriff nach Art eines Steck-Dreh-Verschlusses (Steck-Dreh-Eingriff), der bevorzugt so ausgebildet ist, dass das erste Klemmteil und das zweite Klemmteil in der Montageausrichtung bei minimierter effektiver Klemmbreite zusammengehalten werden. Zusätzlich können an den Klemmteilen ein oder mehrere zueinander korrespondierende Rastglieder vorgesehen sein, die einem Verdrehen in Richtung auf die Klemmausrichtung zu entgegenwirken und die beiden Klemmteile in der Montageausrichtung halten. Auf diese Weise kann sichergestellt werden, dass die Klemmteile in der Montageausrichtung innerhalb der Geländerplattenaufnahme nicht außer Position zueinander geraten oder sich voneinander lösen können. Das Vorsehen eines Eingriffsdorns und einer Eingriffsöffnung hat zudem den Vorteil, dass sich hierdurch die Drehachse festlegen lässt und die beiden Klemmteile bei einem Verdrehen konzentrisch in Position gehalten werden.

Ebenfalls kann an der Klemmvorrichtung ein bevorzugt in eine Richtung wirkender Sperreingriff ausgebildet sein, der zwischen den Klemmteilen wirksam ist und mittels dem ein ungewolltes Zurückdrehen der Klemmteile aus der Klemmausrichtung in die Montageausrichtung verhindert wird. Bevorzugt ist an einem der Klemmteile eine vielstufige Sperrverrastung und an dem anderen Klemmteil ein Sperrfortsatz vorgesehen. Der Sperrfortsatz kann derart an der Klemmvorrichtung angeordnet sein, dass er sich aus einer Sperrstellung in eine Freigabestellung überführen lässt, wobei vorteilhaft vorgesehen ist, dass der Sperrfortsatz in die Sperrstellung vorgespannt ist und er bei einem Überführen der Klemmvorrichtung aus der Montageausrichtung in die Klemmausrichtung die Sperrverrastung überfährt und selbsttätig in die jeweils nächst höhere Stufe der Sperrverrastung einzugreifen vermag, ein ungewolltes Zurückdrehen in die andere Richtung aber sperrt. Der Sperrfortsatz kann insbesondere werkstoffeinstückig mit einem Klemmteil ausgebildet sein, insbesondere mit dem zur Bildung der Klemmkraft aktiv zu verdrehenden Klemmteil. Bevorzugt ist die Sperrverrastung in einer Keilfläche des einen Klemmteils und der Sperrfortsatz an einem Materialabschnitt des anderen Klemmteils angeordnet.

An dem Klemmteil, dass zur Erzeugung der Klemmkraft gegenüber dem anderen Klemmteil zu verdrehen ist, ist bevorzugt ein Werkzeugansatz für ein Werkzeug vorgesehen, mittels dem das zu verdrehende Klemmteil aus der Montageausrichtung in eine Klemmausrichtung überführt werden kann. Der Werkzeugansatz ist bevorzugt als Werkzeugeingriff ausgebildet. Dieser Werkzeugansatz ist vorteilhaft derart ausgerichtet und auf das zu verwendende Werkzeug abgestimmt, dass das Werkzeug bei Anordnung der Klemmvorrichtung in der Geländerplattenaufnahme bei eingesetzter Geländerplatte bestimmungsgemäß angesetzt werden kann.

Der Werkzeugansatz ist bevorzugt von einer radial einwärts verlaufenden Flachnut gebildet, die eine radial nach außen gerichtete Werkzeugeinführöffnung bildet, in die das Verdrehwerkzeug in der Montageausrichtung und in der Klemmausrichtung der Klemmteile vorteilhaft auch dann radial eingeführt werden kann, wenn sich die Klemmvorrichtung bei eingesetzter Geländerplatte in der Geländerplattenaufnahme befindet. Die Flachnut ist bevorzugt auf der Keilflächenseite des der Geländerplatte zugewandten Klemmteils angeordnet und durchbricht in radialer Richtung eine oder mehrere sich in Umfangsrichtung erstreckende Keilflächen.

Als besonders vorteilhaft wird eine Ausgestaltung angesehen, bei der der Sperrfortsatz derart im Bereich des Werkzeugansatzes ausgebildet ist, dass das bestimmungsgemäße Ansetzen des Werkzeugs den Sperreingriff entriegelt. Hierzu kann der Sperrfortsatz an einem gegenüber dem Werkzeugansatz verschwenkbaren Materialabschnitt der Klemmvorrichtung angeordnet sein, der bei bestimmungsgemäßen Ansetzen des Werkzeugs an die Klemmvorrichtung aus der Sperrstellung in die Freigabestellung gedrängt wird. Bevorzugt bildet der verschwenkbare Materialabschnitt eine gegen die Einführrichtung des Werkzeugs schräg angestellte Fläche einer den Werkzeugansatz bildenden Flachnut.

Das Verdrehwerkzeug selbst ist auf der bei bestimmungsgemäßer Verwendung in den Klemmspalt eintauchenden Eingriffsseite bevorzugt als Flachprofil, insbesondere Flachstahlprofil, ausgebildet und weist an dem dem Klemmteil abgewandten Ende bevorzugt standardisierte Werkzeugaufnahmen, insbesondere Vierkant-Aufnahmen auf, über die es zum Beispiel mit einem handelsüblichen Drehmomentschlüssel oder ähnlichen handelsüblichen Werkzeugen verbunden werden kann. Das Werkzeug kann außerhalb des in die Geländerplattenaufnahme eingreifenden Abschnitts eine Abkröpfung aufweisen, durch die das bei bestimmungsgemäßer Werkzeugverwendung der Klemmvorrichtung abgewandte Ende des Werkzeugs im Vergleich zu einer nicht gekröpften Ausführung von der Geländerplattenoberfläche weggerückt ist.

Um das Klemmteil, das bei der Überführung der Klemmvorrichtung aus der Montageausrichtung in die Klemmausrichtung verdrehfest gehalten wird, in seiner Position zu sichern, kann als Teil eines die Klemmvorrichtung umfassenden Klemmsystems ein Einlegeteil vorgesehen sein, dass eine Verdrehsicherung für ein Klemmteil bildet. Die Verdrehsicherung kann an oder in einem Seitenschenkel des Einlegeteils ausgebildet sein. Hierzu kann insbesondere eine in eine seitliche Wandung des Einlegeteils eingebrachte Stützaufnahme vorgesehen sein, die an die Außenmaße des verdrehsicher zu haltenden Klemmteils derart angepasst ist, dass sich das Klemmteil bei Überführung des zu verdrehenden Klemmteils in die Klemmausrichtung verdrehsicher an dem Einlegeteil abzustützen vermag. Die im verdrehsicher zu haltenden Klemmteil vorgesehene Stützaufnahme ist vorteilhaft unter Bildung einer Einführöffnung nach oben hin offen, so dass die Klemmvorrichtung positionsgenau in einer Einführrichtung E, bevorzugt von oben, in das Klemmteil eingeführt werden kann, wenn das Einlegeteil und die Geländerplatte sich bereits in der Geländerplattenaufnahme befinden. Die Stützaufnahme kann sich weiter über zumindest einen Teilabschnitt hinweg in Einführrichtung der Klemmvorrichtung gesehen (nach unten hin) verjüngen.

Die Verdrehsicherung kann anstelle einer in der seitlichen Wandung des Einlegeteils vorgesehenen Aufnahme selbstverständlich auch von anders aufeinander abgestimmten Stützelementen am Einlegeteil und an der Klemmvorrichtung gebildet sein, die bevorzugt ebenfalls das Einführen oder Aufsetzen der Klemmvorrichtung in oder auf das Einlegeteil in den Klemmspalt bei bereits eingesetztem Einlegeteil und bereits eingesetzter Geländerplatte ermöglichen.

Die Kombination eines Einlegeteils mit einer an die Außenmaße der Klemmvorrichtung angepassten Stützaufnahme wird unabhängig davon als eigenständige Erfindung angesehen, ob die Klemmvorrichtung als Spannkeilsystem mit inneren Spannmitteln, als Einschlagkeilsystem mit einem und/oder zwei Klemmkeilen oder als Verdrehkeilsystem wie vorstehend beschrieben eingesetzt wird. Eine derartige Stützaufnahme hat unabhängig davon, ob sie als Verdrehsicherung dient, den weiteren Vorteil, dem Monteur die Position der in den Klemmspalt einzusetzenden oder einzutreibenden Klemmvorrichtung vorzugeben.

Es sei angemerkt, dass insbesondere dann, wenn die erfindungsgemäße Klemmvorrichtung nicht ein einem die Geländerplattenaufnahme bildenden strangzupressenden Profil sondern bei an einem Baukörper bodenseitig beabstandet voneinander zu verankernden Einzelbodenklemmen oder bei an Geländerpfosten oder sonstigen Tragstrukturen zu befestigenden Glasklemmen verwirklicht wird, die insbesondere auch (druck)gegossen sein können, kann das feststehende, nicht aktiv zu verdrehende Klemmteil auch direkt an einer Innenseite der Geländerplattenaufnahme angeordnet oder werkstoffeinstückig von einem Teil der Geländerplattenaufnahme selbst gebildet sein.

In den Zeichnungen zeigt
- Fig. 1: ein Ganzglasgeländersystem in einer Explosionsdarstellung,
- Fig. 2a/b: ein Klemmsystem mit einer innerhalb eines Einlegeteils angeordneten Klemmvorrichtung und einem mit einem Klemmteil der Klemmvorrichtung in Eingriff befindlichen Verdrehwerkzeug in verschiedenen Ansichten,
- Fig. 3a-d: die Klemmvorrichtung mit einem ersten, zu verdrehenden Klemmteil und einem zweiten Klemmteil in verschiedenen Ansichten und Positionierungen,
- Fig. 4a: das Ganzglasgeländersystem aus Figur 1 in einer Schnittansicht mit einer in Montageausrichtung befindlicher Klemmvorrichtung,
- Fig. 4b: das Ganzglasgeländersystem aus Figur 4a entlang der Schnittlinie A-A,
- Fig. 5a: das Ganzglasgeländersystem aus Figur 1, Figur 4a und Figur 4b in einer Schnittansicht mit in Klemmausrichtung befindlicher Klemmvorrichtung,
- Fig. 5b: das Ganzglasgeländersystem aus Figur 5a entlang der Schnittlinie B-B,
- Fig. 6: eine Einzelansicht eines zur Verwendung für die Klemmvorrichtung ausgebildeten Verdrehwerkzeugs, und
- Fig. 7a-d: eine zu der in den Figuren 3a-d alternative Ausgestaltung einer Klemmvorrichtung mit einem ersten, aktiv zu verdrehenden Klemmteil und einem zweiten Klemmteil in verschiedenen Ansichten und Positionierungen.

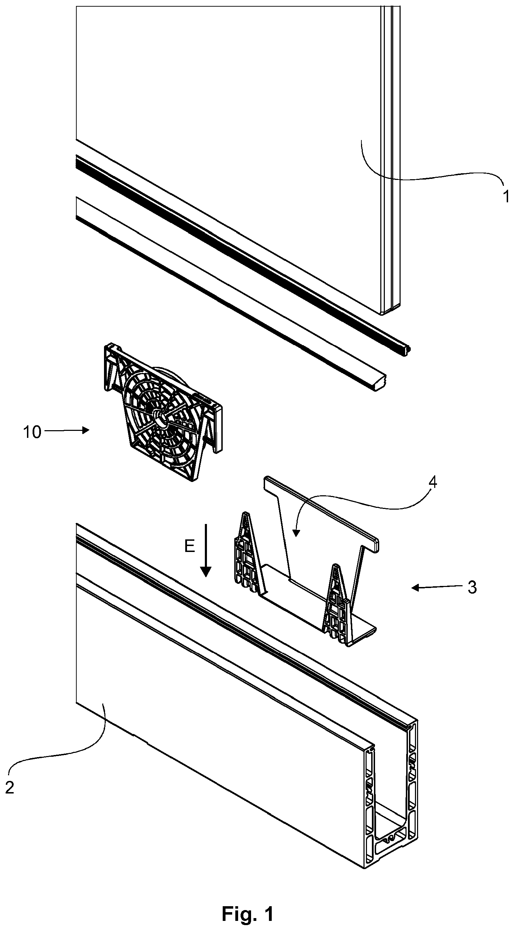

Figur 1 zeigt ein Ganzglasgeländersystem in einer Explosionsdarstellung, das unter anderem eine Geländerplatte 1 und eine von einem u-förmigen, stranggepressten Halteprofil gebildete und bodenseitig zu verankernde Geländerplattenaufnahme 2 umfasst. Zur Fixierung der Geländerplatte 1 in der Geländerplattenaufnahme ist ein Klemmsystem vorgesehen, dass neben einem ebenfalls u-förmigen Einlegeteil 3, dessen Außenmaße an die Innenmaße des die Geländerplattenaufnahme 2 bildenden Halteprofils angepasst sind, eine Klemmvorrichtung 10 aufweist. Bei der Montage wird zunächst das Einlegteil mit oder ohne die in einer Montageausrichtung befindliche Klemmvorrichtung 10 in die Geländerplattenaufnahme 2 eingelegt. Anschließend kann die Geländerplatte 1 eingesetzt werden. Schließlich wird - sofern nicht vor Einsetzen der Geländerplatte 1 schon geschehen - die in einer Montageausrichtung befindliche Klemmvorrichtung 10 in eine am Einlegeteil 3 ausgebildete Stützaufnahme 4 von oben in einer Einführrichtung E eingeführt. Anschließend wird die Klemmvorrichtung 10 zur Ausübung einer Klemmkraft in noch zu beschreibender Weise in eine Klemmausrichtung überführt, um die Geländerplatte 1 innerhalb der Geländerplattenaufnahme 2 klemmend zu fixieren.

Soweit die Figuren ausschließlich ein Geländersystem zeigen, bei dem eine Geländerplatte mit einem unteren Randbereich stehend in eine Geländerplattenaufnahme eingesetzt wird, sei nochmals betont, dass die Klemmvorrichtung auch bei Glasklemmen zum Einsatz kommen kann, die an einer Tragstruktur wie einem Geländerpfosten befestigt werden können.

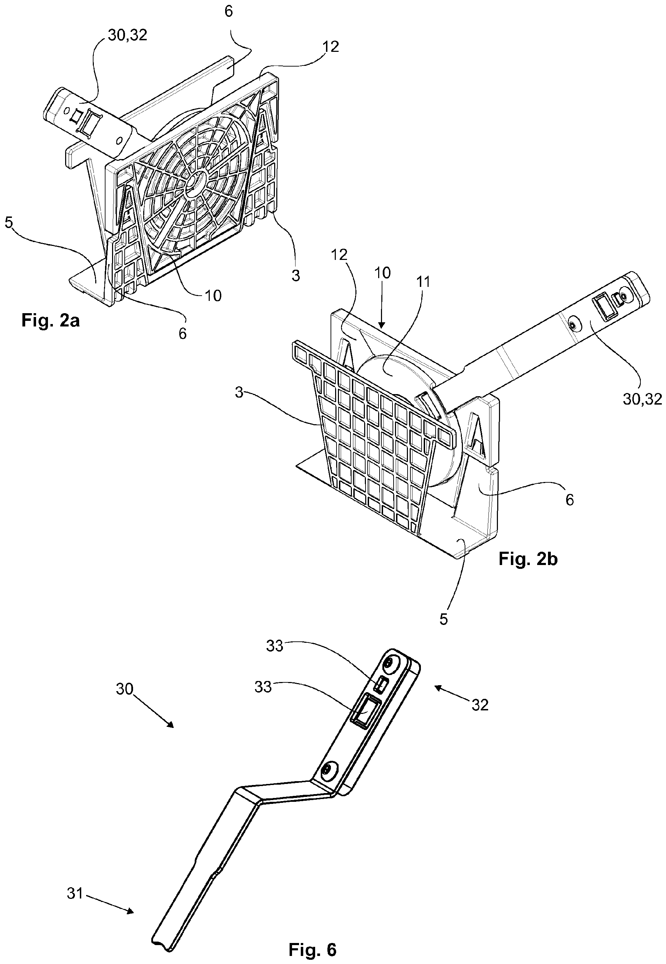

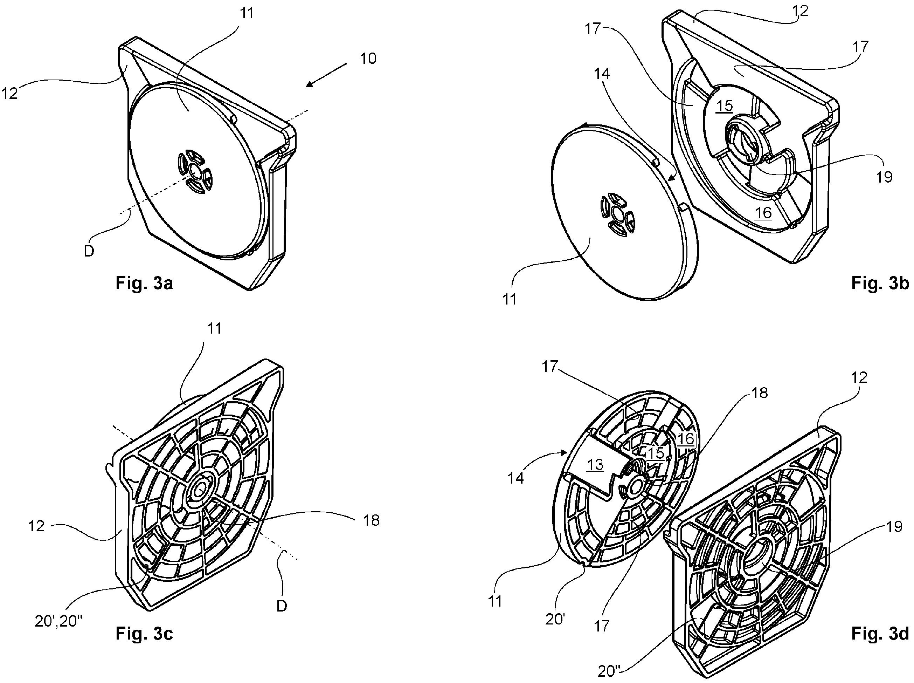

Figur 2a und Figur 2b zeigen das aus Figur 1 bereits ersichtliche Klemmsystem. Das Klemmsystem weist zum einen das aus Figur 1 ersichtliche Einlegeteil 3 sowie die ebenfalls in Figur 1 gezeigte Klemmvorrichtung 10 auf. Die Klemmvorrichtung 10 weist, wie aus Figuren 3a bis 3d ersichtlich ist, ein erstes Klemmteil 11 und ein zweites Klemmteil 12 auf. In den Figuren 2a und 2b greift jeweils ein Verdrehwerkzeug 30, das Figur 6 in einer Einzelansicht zeigt, seitlich in das erste Klemmteil 11 ein.

Das Einlegeteil 3 ist von einer u-förmigen Ausgestaltung und weist einen Bodenschenkel 5 und zwei Seitenschenkel 6 auf. In einem der Seitenschenkel ist die Stützaufnahme 4 zur verdrehsicheren Aufnahme der Klemmvorrichtung 10 ausgebildet. Der Bodenschenkel 5 und der der Stützaufnahme 4 gegenüberliegende Seitenschenkel des Einlegeteils stehen in Kontakt mit der Geländerplatte 1 und halten diese gegenüber den Innenflächen der Geländerplattenaufnahme 2 auf Abstand, so dass es zu keinem direkten Glas-Metall-Kontakt kommen kann.

Die Innenmaße der Stützaufnahme 4 sind an die Außenmaße des zweiten Klemmteils 12 der Klemmvorrichtung 10 angepasst, so dass die Stützaufnahme 4 als Verdrehsicherung dient und das ordnungsgemäß in die Stützaufnahme 4 eingeführte zweite Klemmteil 12 gegen ein Mitdrehen sichert, wenn das erste Klemmteil 11 verdreht wird. Die Stützaufnahme 4 ist nach oben offen und erlaubt das Einführen der Klemmvorrichtung 10 in den Klemmspalt zwischen Geländerplattenoberfläche und innerer seitlicher Stützfläche der Geländerplattenaufnahme auch dann, wenn Geländerplatte und Einlegteil sich bereits in der Geländerplattenaufnahme befinden.

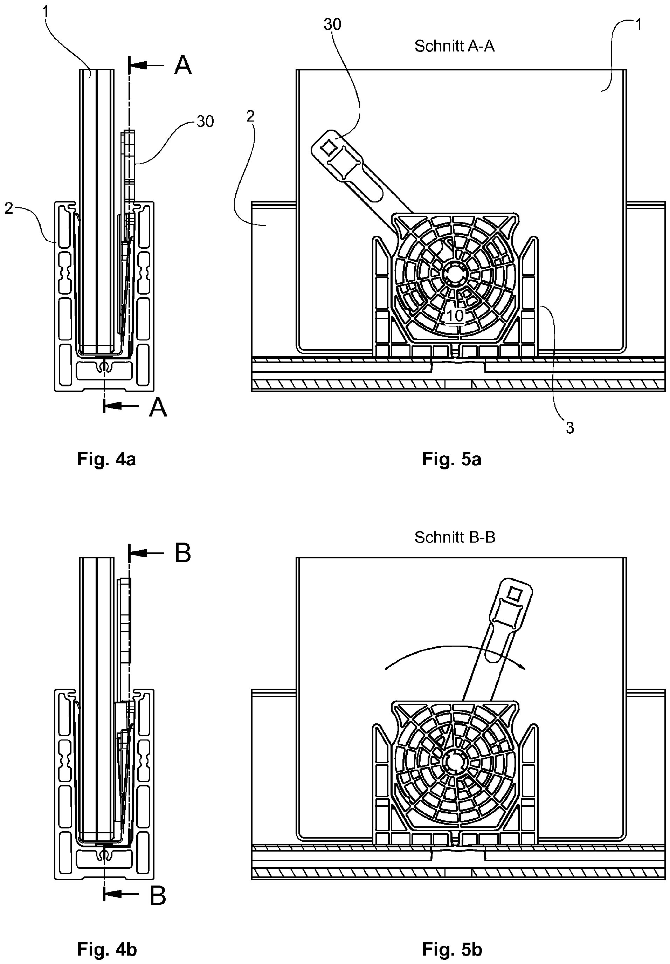

Wie aus Figur 4 ersichtlich greift ein Verdrehwerkzeug 30 seitlich in das erste Klemmteil 11 ein. Hierzu ist an der dem zweiten Klemmteil zugewandten Seite des ersten Klemmteils 11 (der Keilflächenseite) eine Flachnut 13 ausgebildet, die sich radial einwärts auf die zur seitlichen Geländerplattenoberfläche senkrecht ausgerichtete Drehachse D zu erstreckt. Die Flachnut 13 dient als Werkzeugansatz für das Verdrehwerkzeug und bildet radial auswärts eine Einführöffnung 14 für das Verdrehwerkzeug aus. Wie aus den Figuren 2a und 2b sowie den Figuren 4a bis 5b ersichtlich, ist die Flachnut 13 und die von dieser gebildete -Werkzeug-Einführöffnung 14 derart ausgerichtet, dass der hierdurch gebildete Werkzeugansatz sowohl in der Montageausrichtung (Figuren 2a, 4a und 4b) als auch in der Klemmausrichtung (Figuren 2b, 5a und 5b) auch dann problemlos zugänglich ist, wenn die Klemmvorrichtung 10 sich in dem Klemmspalt befindet.

Das Verdrehwerkzeug 30 kann, wie etwa aus Figur 2b und Figur 6 ersichtlich, zwischen einem in die Klemmvorrichtung eingreifenden Eingriffsende 31 des Verdrehwerkzeugs und dem dem Eingriffsende 31 abgewandten Ende 32 abgekröpft sein, um das dem Eingriffsende 31 abgewandte Ende 32 von der Geländerplattenoberfläche wegzurücken und die Gefahr, dass man bei der Montage auf einer Baustelle mit schwerem Werkzeug gegen die Teils empfindliche Geländerplattenoberfläche stößt und diese beschädigt, zu minimieren. Das Verdrehwerkzeug kann aber, wie aus den Figuren 4a und 4b ersichtlich, auch ohne eine derartige Abkröpfung auskommen.

An dem dem Eingriffsende 31 abgewandten Ende weist das Verdrehwerkzeug 30 zwei standardisierte Werkzeugaufnahmen 33 auf (z.B. eine ¼" und eine ½" Vierkantaufnahme), die dazu genutzt werden können, einen Drehmomentschlüssel anzusetzen und so eine definierte Klemmkraft aufzubringen. Die Werkzeugaufnahme kann aber selbstverständlich auch andersartig ausgebildet sein, etwa von einem Innen- oder einen vorspringenden Außensechskant zum Ansetzen einer Knarre oder eines Schraubenschlüssels oder ähnlichen handelsüblichen Werkzeugen gebildet sein.

Das Verdrehwerkzeug 30 selbst wird nach Überführen des ersten Klemmteils in die in Klemmausrichtung selbstverständlich entfernt und ermöglicht dabei die Rückkehr eines Sperreingriffs in die Sperrstellung.

Figuren 3a bis 3d zeigen die Klemmvorrichtung 10 im Detail. Das erste Klemmteil 11 und das zweite Klemmteil 12 weisen auf ihren einander zugewandten Keilflächenseiten über einen inneren umlaufenden Ringabschnitt 15 und einen äußeren umlaufenden Ringabschnitt 16 jeweils zwei sich über die Ringabschnitte in Umfangsrichtung verteilende bzw. aufeinander folgende gebogen verlaufende Keilflächen 17 mit jeweils gleicher Steigung auf. Die ersten Keilflächen am ersten Klemmteil 11 und die ersten Keilflächen am zweiten Klemmteil 12 sind zueinander korrespondierend ausgebildet, wobei Keilflächen am ersten Klemmteil durch die als Werkzeugansatz dienende Flachnut 13 durchbrochen sind.

In Figuren 3b und 3d sind Eingriffsglieder in Form eines Eingriffsdorns 18 und einer Eingriffsöffnung 19 zu erkennen, die zusammen einen bajonettartigen Steck-Dreh-Eingriff bilden. Zur Sicherung des ersten Klemmteils 11 am zweiten Klemmteil 12 wird das erste Klemmteil 11 in der Klemmausrichtung auf das zweite Klemmteil 12 aufgesetzt werden, wobei am Eingriffsdorn vorgesehene seitliche Vorsprünge in der Einführöffnung vorgesehene Ausnehmungen durchdringen. Sodann wird kann das erste Klemmteil 11 in die Montageausrichtung verdreht werden, wobei der Eingriffsdorn mit der Eingriffsöffnung formschlüssig in Eingriff gerät.

Bei Erreichen der Montageausrichtung (Figur 3a und 3c) kommen an den Klemmteilen vorgesehene und miteinander korrespondierende Rastglieder 20' und 20" in Eingriff miteinander und verhindern ein ungewolltes Zurückdrehen des ersten Klemmteils 11 in Richtung auf die Klemmausrichtung zu.

Aus der Gegenüberstellung von Figuren 4a und 4b, bei denen sich die Klemmvorrichtung in der Montageausrichtung befindet, mit den Figuren 5a und 5b, bei denen sich die Klemmvorrichtung in der Klemmausrichtung befindet, ergibt sich, dass die effektive Klemmbreite sich unterscheidet. Bei in Montageausrichtung befindlicher Klemmvorrichtung ist zwischen der der Geländerplattenoberfläche und der dieser zugewandten Klemmfläche des ersten Klemmteils noch ein geringer Abstand zu erkennen (Figur 4a). Das Verdrehwerkzeug kann in der in Figur 4b gezeigten Stellung in die Einführöffnung eingeführt und mit dem zu verdrehenden ersten Klemmteil 11 in Eingriff gebracht werden.

Wird das Verdrehwerkzeug aus der in Figur 4b gezeigten Stellung (die Klemmteile befinden sich in Montageausrichtung zueinander) in die in Figur 5b gezeigte Stellung überführt (die Klemmteile befinden sich in Klemmausrichtung), so wird das erste Klemmteil 11 durch die beim Verdrehen aufeinander abgleitenden Keilflächen unter Erzeugung der Klemmkraft gegen die Geländerplattenoberfläche gedrängt und verklemmt bzw. fixiert so die Geländerplatte 1 in der Geländerplattenaufnahme 2.

Die Möglichkeit, an dem dem Eingriffsende 31 des Verdrehwerkzeugs 30 abgewandten Ende 32 über eine Werkzeugaufnahme 33 eine Knarre, insbesondere einen Drehmomentschlüssel, anzusetzen, gewährleistet, dass der Monteur die Vielzahl der in Geländerverlaufsrichtung zu verteilenden Klemmvorrichtungen definiert und gleichmäßig anziehen kann.

Es sei darauf hingewiesen, dass die Anordnung der Klemmvorrichtung im Klemmspalt und zwischen der Geländerplattenoberfläche und der seitlichen Stützfläche der Geländerplattenaufnahme nicht bedeuten muss, dass bei in Klemmausrichtung befindlicher Klemmvorrichtung die Klemmteile unmittelbar in Anlage mit der Geländerplattenoberfläche oder der seitlichen Stützfläche der Geländerplattenaufnahme stehen. Es kann vorgesehen sein, das zwischen Geländerplattenaufnahme und dem dieser zugewandten Klemmteilfläche und/oder zwischen der seitlichen Stützfläche der Geländerplattenaufnahme und der dieser zugewandten Klemmteilfläche Zwischeneinlagen vorgesehen sind, etwa Gummi- oder Weichkunststofflagen.

Wie aus den Figuren hervorgeht ist wenigstens eine Seite der Klemmteile 11, 12 zum Einsparen von Material mit einer Verrippung versehen. Bevorzugt sind die mit einer Verrippung versehenen Seiten der Klemmteile die Keilflächenseite des ersten, zur Geländerplatte benachbarten Klemmteils 11 sowie die der Keilflächenseite abgewandte bzw. die der seitlichen Stützfläche der Geländerplattenaufnahme zugewandte Seite des zur seitlichen Stützfläche benachbarten zweiten Klemmteils 12.

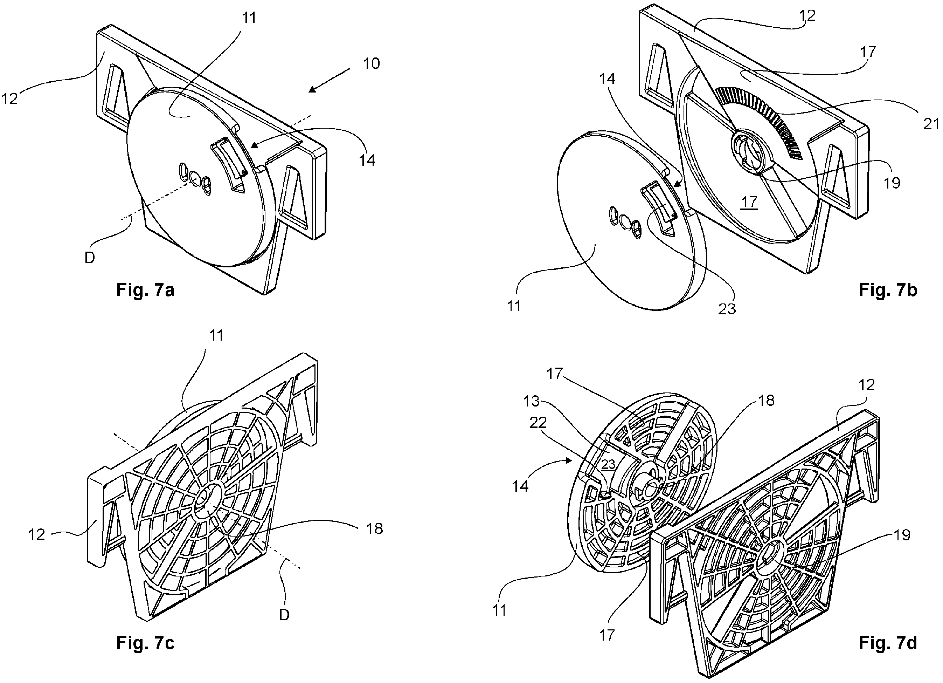

Figuren 7a bis 7d zeigen eine alternative Ausgestaltung einer Klemmvorrichtung. Nachfolgend wird nur auf Merkmale eingegangen, in denen sich diese Ausführungsform von der in Figuren 3a-d unterscheidet. Ansonsten gelten die Ausführungen zu Figuren 3a-d auch für die in Figuren 7a-d gezeigte Ausführungsform. Merkmale, die in Figuren 3a-d gezeigt sind, können aber selbstverständlich auch bei der in Figuren 7a-d gezeigten Ausführungsform alternativ oder zusätzlich zum Einsatz kommen, ebenso wie Merkmale, die in Figuren 7a-d gezeigt sind, bei der in Figuren 3a-d gezeigten Ausführungsform zum Einsatz kommen können.

Die in den Figuren 7a-d gezeigte Ausführungsform weist lediglich einen einzigen Ringabschnitt mit zwei Keilflächen 17 auf und keinen inneren und äußeren Ringabschnitt.

In den Figuren 7a-d ist außerdem ein an der Klemmvorrichtung 10 zu erkennender und in eine Richtung wirkender Sperreingriff ausgebildet sein, der zwischen dem ersten Klemmteil 11 und dem zweiten Klemmteil 12 wirksam ist und mittels dem ein ungewolltes Zurückdrehen der Klemmteile 11, 12 aus der Klemmausrichtung in die Montageausrichtung verhindert wird.

Zur Bildung des Sperreingriffs ist an dem zweiten Klemmteil 12 in einer Keilfläche 17 eine vielstufige Sperrverrastung 21 und an dem ersten Klemmteil 11 im Bereich eines Werkzeugansatzes ein Sperrfortsatz 22 vorgesehen. Der Sperrfortsatz 22 ist in die Sperrstellung, in der er in die Sperrverrastung 21 eingreift, vorgespannt. Wird die Klemmvorrichtung aus der Montageausrichtung (Fig. 7a) in die Klemmausrichtung überführt, überfährt der Sperrfortsatz 22 die Sperrverrastung 21 und greift ähnlich einem Ratschenmechanismus unter wiederholtem Zurückfedern in die jeweils nächst höhere Stufe der Sperrverrastung ein. Wie aus den Figuren ersichtlich ist der Sperrfortsatz 22 werkstoffeinstückig an dem ersten Klemmteil 11 ausgebildet, während die Sperrverrastung 21 werkstoffeinstückig am zweiten Klemmteil 12 ausgebildet ist. Diese Anordnung kann selbstverständlich umgekehrt werden.

Aus den Figuren 7a-d ist ferner ersichtlich, dass der Sperrfortsatz 22 derart im Bereich der Flachnut 13, die den Werkzeugansatz bildet, angeordnet ist, dass bei einem Einführen des Werkzeugs in die Flachnut der aufgrund der Vorspannung in die Sperrstellung bestehende Sperreingriff entriegelt wird. Bei Einführen des Werkzeugs in die Flachnut 13 verdrängt das Werkzeug einen Materialabschnitt 23, an dem der Sperrfortsatz 22 angeordnet ist. Der Materialabschnitt 23 bildet eine gegen die Einführrichtung des Werkzeugs schräg angestellte Fläche, so dass das Werkzeug den Sperrfortsatz 22 aus der Sperrstellung in die Freigabestellung drängt, wenn es an der Klemmvorrichtung angesetzt wird und in die Flachnut 13 eingeführt wird.

Soweit aus den Figuren hervorgeht, dass das aktiv zu verdrehende erste Klemmteil eine zur Geländerplatte hin weisenden Klemmfläche aufweist, sei angemerkt, dass diese Anordnung selbstverständlich auch umgekehrt werden kann, so dass die von dem aktiv zu verdrehenden Klemmteil gebildete Klemmfläche eine der Geländerplatte abgewandte Fläche sein kann, die sich gegen in Richtung einer Innenseite der Geländerplattenaufnahme oder einer Glasklemme abstützt.

Hervorgehoben sei ferner, dass die wirksame Klemmfläche des aktiv zu verdrehenden Klemmteils eine Kreisfläche bildet. Die sich hierdurch ergebende rund- oder ringflächige Anlage der Klemmfläche gegen die Geländerplatte oder - bei umgekehrter Ausrichtung - gegen eine Innenfläche der Geländerplattenaufnahme führt zu einer vorteilhaften und spannungsfreieren Klemmung der Geländerplatte und kann dazu beitragen, Spannungsspitzen in der Geländerplatte zu reduzieren oder gar gänzlich zu vermeiden, die es insbesondere bei der Verwendung von thermisch vorbehandeltem Glas nach Möglichkeit weitgehend zu vermeiden gilt.

### Bezugszeichenliste

- 1: Geländerplatte
- 2: Geländerplattenaufnahme
- 3: Einlegteil
- 4: Stützaufnahme
- 5: Bodenschenkel
- 6: Seitenschenkel
- 10: Klemmvorrichtung
- 11: erstes Klemmteil
- 12: zweites Klemmteil
- 13: Flachnut
- 14: Werkzeug-Einführöffnung
- 15: innerer Ringabschnitt
- 16: äußerer Ringabschnitt
- 17: Keilflächen
- 18: Eingriffsdorn
- 19: Eingriffsöffnung
- 20',20": Rastglieder
- 21: Sperrverrastung
- 22: Sperrfortsatz
- 23: rückfedernder Materialabschnitt
- 30: Verdrehwerkzeug
- 31: Eingriffsende
- 32: abgewandtes Ende
- 33: Werkzeugaufnahmen
- E: Einführrichtung
- D: Drehachse

## Patentansprüche

1. Klemmvorrichtung (10) für die klemmende Fixierung von Geländerplatten (1) in einer Geländerplattenaufnahme (2) oder für die klemmende Fixierung von Geländerplatten mittels einer an einem Geländerpfosten oder einer sonstigen Trag- oder Bauwerksstruktur anzubringenden Glasklemme, mit einem ersten Klemmteil (11) und mit einem zweiten Klemmteil (12), die derart zusammenwirken, dass durch eine Verlagerung des einen Klemmteils relativ zum anderen Klemmteil aus einer Montageausrichtung in eine Klemmausrichtung die effektive Klemmweite unter Erzeugung einer Klemmkraft zur Geländerplatte (1) erhöht wird, wobei das eine Klemmteil und das andere Klemmteil bei Anordnung des gegenüber dem anderen Klemmteil (12) zu verlagernden Klemmteils (11) innerhalb der Geländerplattenaufnahme oder der Glasklemme zur Erzeugung der Klemmkraft relativ zueinander um eine senkrecht zur seitlichen Geländerplattenoberfläche stehende Drehachse D zu verdrehen sind, **dadurch gekennzeichnet, dass**
zumindest eines der beiden Klemmteile eine oder mehrere zum anderen Klemmteil weisende Keilflächen aufweist, auf der das andere Klemmteil beim Verdrehen der beiden Klemmteile relativ zueinander abgleitet.

2. Klemmvorrichtung nach Anspruch 1, **dadurch gekennzeichnet, dass** an wenigstens einem der Klemmteile (11, 12) mehrere Keilflächen (17) vorgesehen sind, die sich in Umfangsrichtung aufeinander folgend über wenigstens einen Teil eines Ringabschnitts (15, 16) des Klemmteils (11, 12) erstrecken.

3. Klemmvorrichtung nach einem der vorhergehenden Ansprüche, **dadurch gekennzeichnet, dass** wenigstens eines der Klemmteile (11, 12) wenigstens einen inneren Ringabschnitt (15) mit einer oder mehreren sich in Umfangsrichtung erstreckenden Keilflächen (17) und einen äußeren Ringabschnitt (16) mit einer oder mehreren sich in Umfangsrichtung erstreckenden Keilflächen (17) aufweist.

4. Klemmvorrichtung nach einem der vorhergehenden Ansprüche, **dadurch gekennzeichnet, dass** das erste Klemmteil (11) und das zweite Klemmteil (12) zueinander korrespondierende Eingriffsglieder (18, 19) aufweisen.

5. Klemmvorrichtung nach Anspruch 4, **dadurch gekennzeichnet, dass** die Eingriffsglieder (18, 19) die Klemmteile (11, 12) zumindest in der Montageausrichtung zusammenhalten.

6. Klemmvorrichtung nach einem der vorhergehenden Ansprüche, **dadurch gekennzeichnet, dass** wenigstens ein zwischen den beiden Klemmteilen wirkendes Rastglied (20', 20") vorgesehen ist, das in der Montageausrichtung einem Verdrehen der Klemmteile (11, 12), insbesondere einem Verdrehen der Klemmteile in Richtung der Klemmausrichtung, entgegenwirkt.

7. Klemmvorrichtung nach einem der vorhergehenden Ansprüche, **dadurch gekennzeichnet, dass** an dem zur Erzeugung der Klemmkraft zu verdrehenden Klemmteil (11) ein Werkzeugansatz (13, 14) für ein Verdrehwerkzeug (30) ausgebildet ist, mittels dem das zu verdrehende Klemmteil (11) bei in einem zwischen der Geländerplattenoberfläche und einer seitlichen Stützfläche gebildeten Klemmspalt befindlicher Klemmvorrichtung (10) aus der Montageausrichtung in eine Klemmausrichtung überführt werden kann.

8. Klemmvorrichtung nach einem der vorhergehenden Ansprüche, **dadurch gekennzeichnet, dass** an der Klemmvorrichtung (10) ein Sperreingriff ausgebildet ist, mittels dem ein Zurückdrehen der Klemmvorrichtung in Richtung der Montageausrichtung verhindert ist.

9. Klemmvorrichtung nach Anspruch 8, **dadurch gekennzeichnet, dass** der Sperreingriff derart ausgebildet ist, dass er durch ein bestimmungsgemäßes Ansetzen eines Verdrehwerkzeugs (30) entriegelt wird.

10. Klemmsystem mit einer Klemmvorrichtung nach einem der vorhergehenden Ansprüche und mit einem in die Geländerplattenaufnahme (2) einzulegenden Einlegeteil (3), **dadurch gekennzeichnet, dass** am Einlegeteil (3) eine Verdrehsicherung für die Klemmvorrichtung (10) ausgebildet ist.

11. Klemmsystem nach dem vorhergehenden Anspruch, **dadurch gekennzeichnet, dass** als Verdrehsicherung eine Stützaufnahme (4) im Einlegeteil (3) vorgesehen ist, die an die Außenmaße des verdrehsicher zu haltenden Klemmteils (12) derart angepasst ist, dass sich das Klemmteil (12) verdrehsicher an dem Einlegeteil (3) abzustützen vermag.

12. Klemmsystem nach dem vorhergehenden Anspruch, **dadurch gekennzeichnet, dass** die Stützaufnahme (4) zur Einführung der Klemmvorrichtung (10) in die Stützaufnahme (4) in einer Einführrichtung (E) bei in die Geländerplattenaufnahme (2) eingelegten Einlegteil (3) und bei in die Geländerplattenaufnahme (2) eingesetzter Geländerplatte (1) nach oben offen ist.

13. Geländerplattenfixiersystem mit einer Klemmvorrichtung (10) nach einem der Ansprüche 1 bis 9 in Verbindung mit Anspruch 7 oder mit einem Klemmsystem nach einem der Ansprüche 10 bis 12 in Verbindung mit einer Klemmvorrichtung (10) nach Anspruch 7, ferner aufweisend ein Verdrehwerkzeug (30) zur Verwendung bei der Klemmvorrichtung (10), wobei das Verdrehwerkzeug (30) mit einer bei bestimmungsgemäßer Verwendung in den Klemmspalt eingreifenden und auf den Werkzeugansatz (13, 14) an der Klemmvorrichtung (10) abgestimmten Eingriffsende (31) versehen ist.

14. Geländerplattenfixiersystem nach dem vorhergehenden Anspruch, wobei das Verdrehwerkzeug ein bei bestimmungsgemäßer Verwendung des Verdrehwerkzeugs (30) von der Klemmvorrichtung (10) abgewandtes Ende (32) aufweist, an dem eine oder mehrere verschiedene Werkzeugaufnahmen (33) für handelsübliche Werkzeuge vorgesehen sind.

15. Geländerplattenfixiersystem nach einem der beiden vorhergehenden Ansprüche, **dadurch gekennzeichnet, dass** das Eingriffsende (31) von einem Flachprofil gebildet ist, dass an eine an einem zu verdrehenden Klemmteil (11) vorgesehene radial nach außen weisende Werkzeug-Eingriffsöffnung (14) einer den Werkzeugansatz bildenden Flachnut (13) angepasst ist.

## Claims

1. Clamping device (10) for the clamping fixation of railing panels (1) in a railing panel holder (2) or for the clamping fixation of railing panels by means of a glass clamp to be attached to a railing post or other supporting or building structure, having a first clamping part (11) and having a second clamping part (12) which interact in such a way that, by displacing one clamping part relative to the other clamping part from a mounting orientation to a clamping orientation, the effective clamping width is increased while generating a clamping force to the railing panel (1), wherein the one clamping part and the other clamping part, when the clamping part (11) to be displaced relative to the other clamping part (12) is arranged within the railing panel holder or the glass clamp, are to be rotated relative to one another about an axis of rotation D perpendicular to the lateral railing panel surface in order to generate the clamping force, **characterized in that** at least one of the two clamping parts has one or more wedge surfaces facing the other clamping part, on which the other clamping part slides when the two clamping parts are rotated relative to one another.

2. Clamping device according to claim 1, **characterized in that** a plurality of wedge surfaces (17) are provided on at least one of the clamping parts (11, 12), which wedge surfaces extend in succession in the circumferential direction over at least part of an annular portion (15, 16) of the clamping part (11, 12).

3. Clamping device according to one of the preceding claims, **characterized in that** at least one of the clamping parts (11, 12) comprises at least one inner annular portion (15) with one or more in the circumferential direction extending wedge surfaces (17) and an outer annular portion (16) with one or more in the circumferential direction extending wedge surfaces (17).

4. Clamping device according to any one of the preceding claims, **characterized in that** the first clamping part (11) and the second clamping part (12) have mutually corresponding engagement members (18, 19).

5. Clamping device according to claim 4, **characterized in, that** the engagement members (18, 19) hold the clamping parts (11, 12) together at least in the mounting orientation.

6. Clamping device according to one of the preceding claims, **characterized in that** at least one latching member (20', 20") acting between the two clamping parts is provided, which in the mounting orientation counteracts a twisting of the clamping parts (11, 12), in particular a twisting of the clamping parts in the direction of the clamping orientation.

7. Clamping device according to one of the preceding claims, **characterized in that** a tool attachment (13, 14) for a twisting tool (30) is formed on the clamping part (11) to be twisted for generating the clamping force, by means of which tool attachment (13, 14) the clamping part (11) to be twisted can be transferred from the mounting orientation into a clamping orientation when the clamping device (10) is located in a clamping gap formed between the railing panel surface and a lateral support surface.

8. Clamping device according to one of the preceding claims, **characterized in that** a locking engagement is formed on the clamping device (10), by means of which the clamping device is prevented from rotating back in the direction of the mounting orientation.

9. Clamping device according to claim 8, **characterized in that** the locking engagement is designed such that it is unlocked by an intended application of a twisting tool (30).

10. Clamping system with a clamping device according to one of the preceding claims and with an insert part (3) to be inserted into the railing panel holder (2), **characterized in that** an anti-rotation device for the clamping device (10) is formed on the insert part (3).

11. Clamping system according to the preceding claim, **characterized in that** a support receptacle (4) is provided in the insert part (3) as an anti-rotation device, which support receptacle (4) is adapted to the outer dimensions of the clamping part (12) to be held in a rotation-proof manner in such a way that the clamping part (12) is able to be supported in a rotation-proof manner on the insert part (3).

12. Clamping system according to the preceding claim, **characterized in that** the support receptacle (4) for inserting the clamping device (10) into the support receptacle (4) is open upwards in an insertion direction (E) when the insertion part (3) is inserted into the railing panel holder (2) and when the railing plate (1) is inserted into the railing panel holder (2).

13. A railing panel fixing system comprising a clamping device (10) according to any one of claims 1 to 9 in conjunction with claim 7 or comprising a clamping system according to any one of claims 10 to 12 in conjunction with a clamping device (10) according to claim 7, further comprising a twisting tool (30) for use with the clamping device (10), the twisting tool (30) being provided with an engagement end (31) which, when used as intended, engages in the clamping gap and is matched to the tool attachment (13, 14) on the clamping device (10).

14. Railing panel fixing system according to the preceding claim, wherein the twisting tool has an end (32) facing away from the clamping device (10) when the twisting tool (30) is used as intended, on which end one or more different tool receptacles (33) for commercially available tools are provided.

15. Railing panel fixing system according to one of the two preceding claims, **characterized in that** the engagement end (31) is formed by a flat profile which is adapted to a radially outwardly facing tool engagement opening (14) of a flat groove (13) forming the tool attachment provided on a clamping part (11) to be rotated.

## Revendications

1. Dispositif de serrage (10) pour la fixation par serrage de panneaux de garde-corps (1) dans un support de panneaux de garde-corps (2) ou pour la fixation par serrage de panneaux de garde-corps au moyen d'une pince à verre à attacher à un poteau de garde-corps ou à une autre structure de support ou de construction, avec une première partie de serrage (11) et avec une deuxième partie de serrage (12) qui coopèrent de telle manière que, par un déplacement d'une partie de serrage par rapport à l'autre partie de serrage d'une orientation de montage à une orientation de serrage, la largeur de serrage effective est augmentée tout en générant une force de serrage sur le panneaux de garde-corps (1), dans lequel, lorsque la partie de serrage (11) à déplacer par rapport à l'autre partie de serrage (12) est disposée à l'intérieur du support de panneaux de garde-corps ou de la pince à verre, l'une des parties de serrage et l'autre partie de serrage doivent être tournées l'une par rapport à l'autre autour d'un axe de rotation D qui est perpendiculaire à la surface latérale du panneau de de garde-corps afin de générer la force de serrage, **caractérisé en ce que**
au moins l'une des deux parties de serrage présente une ou plusieurs surfaces de coin orientées vers l'autre partie de serrage, sur lesquelles l'autre partie de serrage glisse lorsque les deux parties de serrage sont tournées l'une par rapport à l'autre.

2. Dispositif de serrage selon la revendication 1, **caractérisé en ce qu'**une pluralité de surfaces de coin (17) sont prévues sur au moins une des parties de serrage (11, 12), lesquelles surfaces de coin (17) s'étendent successivement dans la direction circonférentielle sur au moins une partie d'une portion annulaire (15, 16) de la partie de serrage (11, 12).

3. Dispositif de serrage selon l'une quelconque des revendications précédentes, **caractérisé en ce qu'**au moins l'un des parties de serrage (11, 12) comprenant au moins une portion annulaire intérieure (15) ayant une ou plusieurs surfaces de coin (17) s'étendant circonférentiellement et une portion annulaire extérieure (16) ayant une ou plusieurs surfaces de coin (17) s'étendant circonférentiellement.

4. Dispositif de serrage selon l'une quelconque des revendications précédentes, **caractérisé en ce que** la première partie de serrage (11) et la seconde partie de serrage (12) comprennent des éléments d'engagement mutuellement correspondants (18, 19).

5. Dispositif de serrage selon la revendication 4, **caractérisé en ce que** les éléments d'engagement (18, 19) maintiennent les parties de serrage (11, 12) ensemble au moins dans l'orientation de montage.

6. Dispositif de serrage selon l'une des revendications précédentes, **caractérisé en ce qu'**il est prévu au moins un élément de verrouillage (20', 20") qui agit entre les deux parties de serrage et s'oppose à une rotation des parties de serrage (11, 12) dans l'orientation de montage, en particulier à une rotation des parties de serrage dans le sens de l'orientation de serrage.

7. Dispositif de serrage selon l'une des revendications précédentes, **caractérisé en ce que**, pour générer la force de serrage, une fixation d'outil (13, 14) pour un outil de torsion (30) est formée sur la partie de serrage (11) à tordre, fixation d'outil (13, 14) au moyen de laquelle la partie de serrage (11) à tordre peut être transférée de l'orientation de montage dans une orientation de serrage lorsque le dispositif de serrage (10) se trouve dans une fente de serrage formée entre la surface du panneau de garde-corps et une surface d'appui latérale.

8. Dispositif de serrage selon l'une quelconque des revendications précédentes, **caractérisé en ce qu'**un engagement de verrouillage est formé sur le dispositif de serrage (10), au moyen duquel le dispositif de serrage est empêché de tourner en arrière dans la direction de l'orientation de montage.

9. Dispositif de serrage de la revendication 8, **caractérisé en ce que** l'engagement de verrouillage est configuré pour être déverrouillé par une application prévue d'un outil de torsion (30).

10. Système de serrage avec un dispositif de serrage selon l'une des revendications précédentes et avec une partie d'insertion (3) à insérer dans le support de panneaux de garde-corps (2), **caractérisé en ce qu'**un dispositif anti-rotation pour le dispositif de serrage (10) est formé sur la partie d'insertion (3).

11. Système de serrage selon la revendication précédente, **caractérisé en ce qu'**il est prévu dans la partie d'insertion (3), en tant que dispositif anti-rotation, un réceptacle de support (4) qui est adapté aux dimensions extérieures de la partie de serrage (12) à maintenir de manière fixe en rotation de telle sorte que la partie de serrage (12) puisse être soutenue de manière fixe en rotation sur la partie d'insertion (3).

12. Système de serrage selon la revendication précédente, **caractérisé en ce que** le réceptacle de support (4) pour l'insertion du dispositif de serrage (10) dans le réceptacle de support (4) est ouvert vers le haut dans une direction d'insertion (E) lorsque la partie d'insertion (3) est insérée dans le support de panneaux de garde-corps (2) et lorsque la plaque de rampe (1) est insérée dans le support de panneaux de garde-corps (2).

13. Système de fixation de panneaux de garde-corps comprenant un dispositif de serrage (10) selon l'une quelconque des revendications 1 à 9 conjointement avec la revendication 7, ou comprenant un système de serrage selon l'une quelconque des revendications 10 à 12 conjointement avec un dispositif de serrage (10) selon la revendication 7, comprenant en outre un outil de torsion (30) destiné à être utilisé avec le dispositif de serrage (10), l'outil de torsion (30) étant muni d'une extrémité d'engagement (31) qui, lorsqu'il est utilisé comme prévu, s'engage dans l'espace de serrage et est adapté à la fixation d'outil (13, 14) sur le dispositif de serrage (10).

14. Système de fixation de panneaux de garde-corps selon la revendication précédente, dans lequel l'outil de torsion a une extrémité (32) tournée à l'opposé du dispositif de serrage (10) lorsque l'outil de torsion (30) est utilisé comme prévu, extrémité sur laquelle sont prévus un ou plusieurs réceptacles d'outils différents (33) pour des outils disponibles dans le commerce.

15. Système de fixation de panneaux de garde-corps selon l'une ou l'autre des deux revendications précédentes, **caractérisé en ce que** l'extrémité d'engagement (31) est formée par un profilé plat qui est adapté à une ouverture d'engagement d'outil (14) tournée radialement vers l'extérieur d'une rainure plate (13) formant l'épaulement d'outil prévu sur la partie de serrage (11) à faire tourner.
